# EUROPÄISCHE PATENTANMELDUNG

(11) **EP 3 556 494 A1**
(43) Veröffentlichungstag der Anmeldung: **23.10.2019**
(21) Anmeldenummer: 18167669.3
(22) Anmeldetag: 17.04.2018
(51) Int. Cl.: B23B 31/00

(54) **WERKZEUGTRÄGER**

(71) Anmelder: Iprotec Maschinen- und Edelstahlprodukte GmbH, 32469 Petershagen-Friedewalde (DE)
(72) Erfinder: Kochsiek, Adolf, 33818 Leopoldshöhe (DE)
(74) Vertreter: Rausch Wanischeck-Bergmann Brinkmann

(57) **Zusammenfassung**

Die Erfindung betrifft einen Werkzeugträger (1) mit einem Werkzeugbereich und einem Werkzeugschnittstellenbereich (2), wobei der Werkzeugschnittstellenbereich (2) eine über eine vorgegebene axiale Länge verlaufende, rotationssymmetrisch ausgebildete Manteloberfläche aufweist und der Werkzeugschnittstellenbereich (2) Bereiche mit unrundem Querschnitt aufweist.

## Beschreibung

Die vorliegende Erfindung betrifft Werkzeugträger mit einem Werkzeugbereich und einem Werkzeugschnittstellenbereich.

Nach dem Stand der Technik hergestellte und im Einsatz befindliche Werkzeugmaschinen verfügen über eine Spindel, in welche ein Werkzeug eingesetzt ist. Eine werkzeugtragende Arbeitsspindel an einer Werkzeugmaschine erfordert aus wirtschaftlichen Gründen, dass das Werkzeug auch gewechselt werden kann. Moderne Werkzeugmaschinen sollen möglichst automatisch arbeiten und von daher auch das Werkzeug automatisch wechseln können. Sie verfügen beispielsweise über Revolversysteme oder andere Werkzeugmagazine. Das Werkzeug muss also über eine Werkzeugschnittstelle verfügen. Die Werkzeugschnittstelle muss sehr hohe Wiederholgenauigkeit haben, das heißt, das gleiche Werkzeug, welches zweimal hintereinander eingespannt wird, soll mit möglichst der gleichen Position laufen. Diese Genauigkeit wirkt sich direkt auf die Genauigkeit der Bearbeitung aus. Ungenaues Spannen kann auch zu Unwucht und damit Produktionsausfällen usw. führen.

Als maschinenseitige Werkzeugaufnahme, insbesondere standardisierte, haben sich im Wesentlichen der Steilkegel und der Hohlschaftkegel durchgesetzt. Der Hohlschaftkegel hat besonders bei hohen Drehzahlen einige Vorteile, jedoch sind Steilkegelwerkzeuge ebenfalls weit verbreitet.

Zum Spannen dient ein Werkzeugspanner, welcher die Aufgabe hat, das Werkzeug nach dem Einsetzen zu fixieren. Es gibt hydromechanische und mechanische, d. h. mit Federkraft arbeitende Systeme. Dabei ist die robuste Ausführung des Tellerfederspanners nach wie vor ein häufig eingesetztes System. Das Lösen des Werkzeuges erfolgt über eine hydraulische oder pneumatische Löseeinheit, die im Stillstand gegen die Federkraft drückt und damit das Werkzeug löst.

Als Werkzeugschnittstelle stehen anwendungsbezogen unterschiedliche Systeme zur Verfügung. Dabei muss zwischen individuell gestalteten Schnittstellen und standardisierten Werkzeugschnittstellen wie dem Hohlschaftkegel (HSK) oder dem Steilkegel (SK) unterschieden werden. Bei einer Frässpindel erfolgen die Werkzeugwechsel größtenteils automatisch durch eine pneumatische, hydraulische oder elektrische Betätigung.

Die Thematik der Werkzeugschnittstelle und des Spannsystems wurde in der Vergangenheit in verschiedenen Arbeitskreisen sowie Forschungs- und Industrieprojekten behandelt. Seitdem hat sich am Markt eine Vielzahl von Schnittstellensystemen (HSK, SK, Big+, Capto, KM, etc.) etabliert, die jeweils systembedingte Vor- und Nachteile aufweisen. Neben den statischen Eigenschaften ist besonders für die rotativen Anwendungen das Verhalten unter Drehzahleinfluss entscheidend. Schnittstellen müssen hinsichtlich Eigenschaften wie Biegesteifigkeit und Drehzahleignung ausgelegt werden.

Als direktes Bindeglied zwischen der Werkzeugmaschine und dem Werkzeug beeinflusst die Werkzeugschnittstelle unmittelbar die Leistungsfähigkeit und Qualität des Bearbeitungsprozesses. Abhängig von der Prozessart wirken die Bearbeitungskräfte als Längs- und Querkräfte sowie als Biege- und Torsionsmomente auf die Werkzeugschnittstelle. Der Betrag des Torsionsmoments wird dabei durch die relative radiale Lage zwischen der Werkzeugschneide und der Mittelachse der Werkzeugschnittstelle sowie die Aufteilung der Zerspankraft in ihre Komponenten bestimmt. Die stetige Steigerung der Spindelleistung führt zu immer höheren Bearbeitungskräften und folglich höheren Belastungen der eingesetzten Werkzeugschnittstellen.

Ein wichtiges Beurteilungskriterium von Werkzeugschnittstellen ist das Verhalten unter statischer Torsionslast. Besonders beim Drehen führt der Einsatz von statischen Werkzeugen mit großen radialen Auskraglängen zu hohen Torsionsmomenten an der Werkzeugschnittstelle. Die Verdrehung des Werkzeugs relativ zur Aufnahme, welche als Folge einer Torsionsbelastung entsteht, wirkt sich in Dreh- und Fräsmaschinen in einem Effekt auf das dynamische Prozessverhalten und die Gebrauchsdauer der Werkzeugschnittstelle und der Werkzeugschneiden aus. In Drehmaschinen beeinflussen Verdrehungen zudem unmittelbar die Mittenhöhe der Schneide und damit die Arbeitsgenauigkeit der Maschine.

Als Standard seien beispielhaft die genormten Frässchnittstellen SK (DIN 69871) und HSK-A (DIN 69893) und die ebenfalls genormten kombinierten Dreh- und Frässchnittstellen PSC (ISO 26623) und HSK-T (ISO 12164) genannt. Als Schnittstelle für die Drehbearbeitung wird die genormte VDI (DIN ISO 10889) genannt.

Es hat sich herausgestellt, dass das reibschlüssig übertragbare Moment die Belastung der Schnittstelle charakterisiert, bei der ohne weitere Erhöhung der Belastung eine Relativbewegung zwischen Werkzeug und Aufnahme stattfindet. Im Anschluss bildet sich eine Kontaktzone an den Mitnehmerelementen. Eine weitere Zunahme der Belastung führt zu einer Einfederung an diesem Kontakt und einer Zunahme der Verdrehsteifigkeit. Besonders bemerkenswert ist, dass sich bei vollständigem Kontakt ein lineares Lastverformungsverhalten einstellt.

Die Werkzeugschnittstelle liegt bei der Zerspanung stets direkt im Kraftfluss und sollte sowohl eine hohe Steifigkeit aufweisen, als auch einen schnellen Werkzeugwechsel ermöglichen, um die Nebenzeiten gering zu halten.

Die steigenden Bearbeitungskräfte resultieren aus stetig steigenden Antriebsleistungen, sowie anspruchsvolleren Werk- und Schneidstoffen. Dies führt zu steigenden Belastungen der Werkzeugschnittstelle, welche diese beschädigen können oder ihren Einsatz aufgrund zu geringer Steifigkeiten und hoher Genauigkeitsanforderungen ausschließen.

Wie sich aus den obigen Beschreibungen ergibt, findet aufgrund des Lastverformungsverhaltens ein Materialfluss statt. Bei vollständigem Kontakt im Bereich der Werkzeugschnittstelle zwischen Werkzeug und Werkzeugträger ergibt sich somit eine unkontrollierbare Positionierung aufgrund des Materialflusses und der dadurch entstehenden Überbestimmung.

Ausgehend vom vorbeschriebenen Stand der Technik liegt der vorliegenden Erfindung die **Aufgabe** zugrunde, einen Werkzeugträger der gattungsgemäßen Art dahingehend weiterzubilden, dass dieser insbesondere hinsichtlich seines Lastverformungsverhaltens verbessert wird, ohne in Bezug auf seine sonstigen technischen Eigenschaften und Qualitäten Einbußen hinnehmen zu müssen, wobei die Kompatibilität zu den entsprechenden Normen erhalten bleiben muss.

Zur technischen **Lösung** dieser Aufgabe wird ein Werkzeugträger mit den Merkmalen des Patentanspruches 1 vorgeschlagen. Weitere Vorteile und Merkmale ergeben sich aus den Unteransprüchen.

Die technische Lösung besteht darin, dass der Werkzeugschnittstellenbereich Sektionen mit unrundem Querschnitt aufweist. Auf diese Weise werden erhebliche Vorteile erzielt. Beim Einspannen wird der Schnittstellenbereich in den Träger hineingezogen, wobei es zum Materialfluss kommt. Durch die Erfindung wird die Möglichkeit zur elastischen Verformung begünstigt und gefördert. Gemäß der Erfindung erfolgt dies dadurch, dass auf der Manteloberfläche im Werkzeugschnittstellenbereich des Werkzeugträgers wenigstens eine Senke ausgebildet ist. Es hat sich gezeigt, dass dadurch der Vollkontakt zwischen Werkzeugaufnahme und Werkzeugschnittstelle unterbrochen wird und Materialflussräume geschaffen werden.

Es handelt sich um einen elastischen Vorgang, das heißt, sobald die Belastung nachlässt, befindet sich der Werkzeugträger in seiner ursprünglichen Form. Die Spannkräfte können sich leichter verteilen, was die Möglichkeit schafft, höhere Übermaße in der Werkzeugschnittstelle zuzulassen, ohne dass die Flächenpressung außerhalb der zulässigen Bereiche für elastische Verformung gerät. Damit wird eine Möglichkeit geschaffen, die Werkzeugschnittstelle steifer und technisch vorteilhafter zu gestalten. Durch die Ausbildung der Senken können darüber hinaus auch ein automatisches Einsetzen und Entnehmen verbessert werden.

Bei HSK- oder SK-Schnittstellen, aber auch generell ist es vor Vorteil, Senken in einer gewissen Symmetrie anzuordnen. In vorteilhafter Weise sind die Senken hinsichtlich ihrer radialen Eindringtiefe in die Manteloberfläche eindeutig definiert. Das gleiche gilt für ihre axiale Ausdehnung in axialer Richtung der Manteloberfläche ebenso wie in ihrer Länge im Umfang der Manteloberfläche. Die Senken stellen vorzugsweise einen sprungfreien eindeutig definierten Vertiefungsbereich dar.

Die Länge entlang des Umfanges der Manteloberfläche wird durch den Mittelpunktswinkel definiert. Auf gleicher axialer Höhe liegende Senken haben gemäß einem vorteilhaften Vorschlag der Erfindung alle den gleichen Mittelpunktswinkel. Darüber hinaus sind sie um den jeweils gleichen Mittelpunktswinkel voneinander entfernt. Selbstverständlich sind die Mittelpunktswinkel der Ausdehnung und die Mittelpunktswinkel der Abstände zueinander unterschiedlich. Bei allen entsprechenden durch Torsion und Biegung beaufschlagten Systemen kommt es zu Übertragungsflanken im rotatorischen Sinne, so dass dazwischenliegende beispielsweise über die gesamte axiale Länge verlaufende Senken ausreichend Aufnahmeräume für den Materialfluss bereitstellen.

Üblicherweise sind entsprechende Werkzeugschnittstellen in axialer Richtung segmentiert, das heißt sie weisen Bereiche unterschiedlicher zylindrischer oder kegliger Ausbildung auf. In diesen Segmenten sind die Senken entsprechend gleichmäßig angeordnet, so dass sich in den unterschiedlichen Ebenen unterschiedliche axiale Bereiche mit unrundem Querschnitt ausbilden.

Mit der Erfindung wird eine mit geringen technischem Aufwand umsetzbare Lösung bereitgestellt, um die Effektivität der Nutzung entsprechender Werkzeugträger zu erhöhen.

In erfindungsgemäßer Weise können die an sich rotationssymmetrisch ausgebildeten Manteloberflächen in einem Unrunddrehverfahren bearbeitet werden, um auf diese Weise exakt positionierte, exakte ausgedehnte und hinsichtlich der Tiefe eindeutige Senken in einem sehr schnellen Drehverfahren herzustellen.

Weitere Vorteile und Merkmale der Erfindung ergeben sich aus der folgenden Beschreibung anhand der Figuren. Dabei zeigen:
- Fig. 1: eine Darstellung eines erfindungsgemäß weitergebildeten Werkzeugträgers nach dem HSK-System;
- Fig.2: eine Darstellung eines erfindungsgemäß weitergebildeten Werkzeugträgers nach dem SK-System.

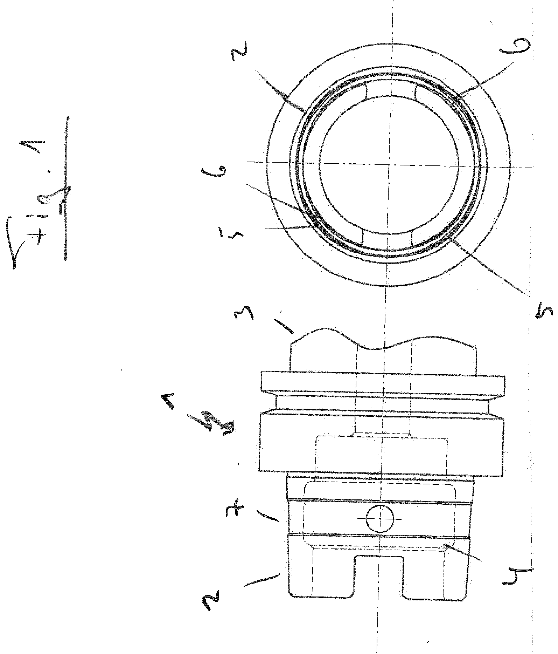

Fig. 1 zeigt einen herkömmlichen Werkzeugträger 1 nach dem HSK-System, welcher über einen Schnittstellenbereich 2 und einen Werkzeugträgerbereich 3 verfügt. Der Werkzeugträgerbereich 3 ist nur bis zur Schnittlinie angedeutet und ansonsten standardgemäß.

In üblicher Weise zeigen die Innenverläufe die Kanten 4 zum Hintergreifen und Hereinziehen des Werkzeugträgers in die Werkzeugaufnahme einer Werkzeugmaschine und dergleichen.

All diese Details sind standardgemäß.

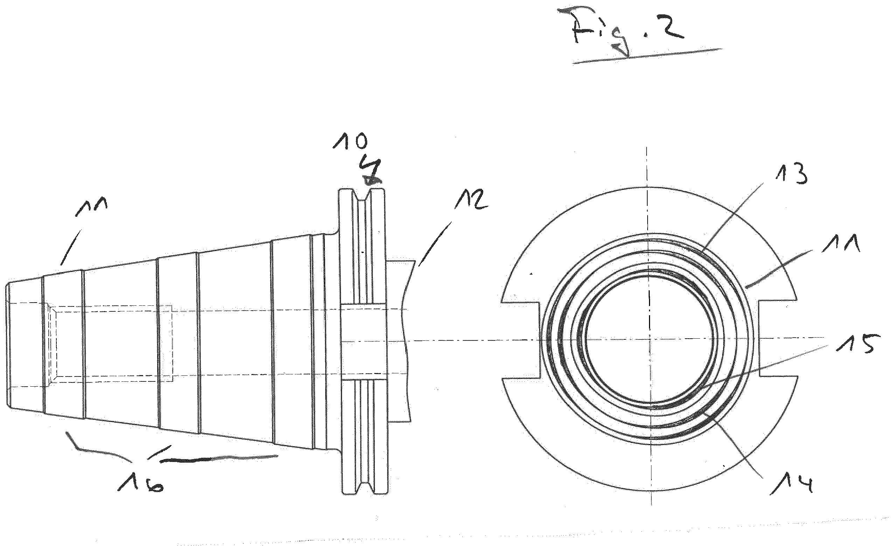

Fig. 2 zeigt entsprechend den Werkzeugträger 10 nach dem SK-System mit dem Schnittstellenbereich 11 und dem Trägerbereich 12.

Die jeweils rechten Darstellungen sind Unteransichten des Schnittstellenbereiches 2 beziehungsweise 11.

Sie zeigen, dass in Abweichung von der kreisrunden Ausbildung in die Manteloberfläche Senken 5 und 6 beziehungsweise 13, 14 und 15 ausgebildet sind. Dadurch enthalten die einzelnen axialen Stufen jeweils einen unrunden Querschnitt, der beispielsweise durch Unrunddrehen hergestellt werden kann.

Dieser Unrundquerschnitt bewirkt, dass in den Senken zwischen der Werkzeugschnittstelle und der Werkzeugaufnahme kontaktfreie Bereiche ausgebildet werden, welche einen ausreichenden Materialfluss bei Belastung ermöglichen.

Mit 7 bzw. 16 werden axial verlaufende radiale Freistiche dargestellt, die den Kontaktbereich zwischen Werkzeug und Werkzeugschnittstelle auf ein notwendiges Minimum reduzieren. Damit kann erreicht werden, dass durch geringere Reibung beim Einzugsprozesses mehr Spannkraft an die Plananlage geführt werden kann, was sich insbesondere bei der HSK Schnittstelle deutlich auf die Steifigkeit des Werkzeugs auswirkt, ohne die Kompatibilität zur Norm zu verlieren.

Die beschriebenen Ausführungsbeispiele dienen nur der Erläuterung und sind nicht beschränkend.

Durch Auswahl geeigneter Unrundformen lassen sich Kerbwirkungen vermeiden. Die Anzahl der Senken ist genauso variabel wie die jeweilige Tiefe.

### Bezugszeichen

- 1: Werkzeugträger HSK-System
- 2: Werkzeugschnittstelle
- 3: Werkzeugträger
- 4: Hintergriff
- 5: Senke
- 6: Senke
- 7: Freistellung
- 10: Werkzeugträger SK-System
- 11: Werkzeugschnittstelle
- 12: Werkzeugträgerbereich
- 13: Senke
- 14: Senke
- 15: Senke
- 16: Freistellung

## Patentansprüche

1. Werkzeugträger (1, 10) mit einem Werkzeugbereich und einem Werkzeugschnittstellenbereich (2, 11), wobei der Werkzeugschnittstellenbereich (2, 11) eine über eine vorgegebene axiale Länge verlaufende, rotationssymmetrisch ausgebildete Manteloberfläche aufweist, **dadurch gekennzeichnet, dass** der Werkzeugschnittstellenbereich (2, 11) Sektionen (5, 6, 13, 14, 15) mit unrundem Querschnitt aufweist.

2. Werkzeugträger (1, 10) nach Anspruch 1, **dadurch gekennzeichnet, dass** die Bereiche mit unrundem Querschnitt durch in der Manteloberfläche angeordnete Senken (5, 6, 13, 14, 15) gebildet sind.

3. Werkzeugträger (1, 10) nach einem der vorhergehenden Ansprüche, **dadurch gekennzeichnet, dass** in einer zur Drehachse senkrecht liegenden Schnittebene angeordnete Senken (5, 6, 13, 14, 15) in gleichen Winkelabständen zueinander positioniert sind.

4. Werkzeugträger (1, 10) nach Anspruch 3, **dadurch gekennzeichnet, dass** die Senken (5, 6 ,13, 14, 15) in jeder axialen Ebene die gleiche Bogenlänge aufweisen.

5. Werkzeugträger (1, 10) nach einem der vorhergehenden Ansprüche, **dadurch gekennzeichnet, dass** für eine Senke (5, 6, 13, 14, 15) die axiale Ausdehnung, die radiale Tiefe und die Bogenlänge vorgegeben sind.

6. Werkzeugträger (1, 10) nach einem der vorhergehenden Ansprüche, **dadurch gekennzeichnet, dass** auf der Mantelfläche Senken (5, 6, 13, 14, 15) unterschiedlicher Form und/oder Ausdehnung angeordnet sind.

7. Werkzeugträger (1, 10) nach Anspruch 6, **dadurch gekennzeichnet, dass** Senken (5, 6, 13, 14, 15) unterschiedlicher Form und/oder Ausdehnung in einem Ringbereich angeordnet sind.

8. Werkzeugträger (1, 10) nach einem der vorhergehenden Ansprüche, **dadurch gekennzeichnet, dass** Senken (5, 6, 13, 14, 15) über die gesamte axiale Länge des Werkzeugschnittstellenbereiches (2, 11) verlaufen.

9. Werkzeugträger (1, 10) nach Anspruch 8, **dadurch gekennzeichnet, dass** die Senken (5, 6, 13, 14, 15) über ihren axialen Verlauf Bereiche unterschiedlicher radialer Tiefe aufweisen.

10. Werkzeugträger (1, 10) nach einem der vorhergehenden Ansprüche, **dadurch gekennzeichnet, dass** axial ausgedehnte Senken (5, 6, 13, 14, 15) einen zur Rotationsachse des Werkzeugträgers (1, 10) winkligen Verlauf haben.

11. Werkzeugträger (1, 10) nach einem der vorhergehenden Ansprüche, **dadurch gekennzeichnet, dass** die Anzahl der Senken (5, 6, 13, 14, 15) bezogen auf den Umfang variabel ist.

12. Werkzeugträger (1, 10) nach Anspruch 11, **dadurch gekennzeichnet, dass** die Anzahl der Senken (5, 6, 13, 14, 15) zwischen 3 und 10 liegt.

13. Werkzeugträger (1, 10) nach einem der vorhergehenden Ansprüche, **dadurch gekennzeichnet, dass** die Anzahl der optionalen axialen Freistellungen (7, 16) variabel ist.
